# EUROPEAN PATENT APPLICATION

(11) **EP 1 408 459 A1**
(43) Date of publication of application: **14.04.2004**
(21) Application number: 03022730.0
(22) Date of filing: 09.10.2003
(51) Int. Cl.: G07F 7/02, B60S 5/02, B67D 5/14, G06F 3/033, G07F 13/02

(54) **Secure controller of outdoor payment terminals in compliance with EMV specifications**

(30) Priority: 09.10.2002 IT FI20020190
(71) Applicant: Gilbarco S.p.A., 50145 Firenze (IT)
(72) Inventor: Carapelli, Giovanni, 50142 Firenze (IT); Carozzini, Giorgio, 50065 Pontassieve (IT)
(74) Representative: Gervasi, Gemma, Dr.

(57) **Abstract**

A device for controlling the transmission of data, in compliance with EMV specifications, consisting of a smart card reader, a keypad for entering numbers and letters, a display unit for viewing the transmitted and/or received data, and possibly one or more additional peripherals. At least one of the specified parts contains a CPU unit that runs in the multiuser / multitasking mode meaning that the applications for the different secure data transfers that are handled (sales transactions, legal metrology data, secure software updates, etc.) occupy different and independent processing areas of the CPU and are called independently and asynchronously of each other.

## Description

### Technical Field

This invention relates to a device for transferring data securely. More particularly, it relates to a device for the secure transfer of data involving outdoor payment terminals.

### Background Art

Today, automatic payment systems are used everywhere, and the popularity of credit cards and debit cards, in general, is showing no signs of declining.

These automatic payment systems, which are designed to increase security and decrease the cost per transaction, are constantly evolving; the result of this evolution is the evermore-widespread use of the so-called "smart cards".

These cards offer numerous benefits to users: they are difficult to counterfeit, offer flexibility and security, and reduce the telecommunications costs relating to the sales transaction.

New security specifications are being established as part of the distribution of smart cards as credit cards. An example of this is the EMV (Europay, Mastercard & Visa) specification that shall be adopted as standard in Europe by the Europay, Mastercard, and Visa circuits as from January 2005.

The EMV specification involves the standardization of the electronic payment procedure through two levels of type approval: EMV1 for the hardware and the logical interfaces, and EMV2 for the applications and their features.

Besides money transactions, other types of electronic data transfer must also assure similar security measures to prevent fraud or illegal tampering. An example is the data produced at a fuel station by the self-service fuel pumps. These data are made available for subsequent sales transactions, issue of receipts, accounting, etc. and are handled by procedures and applications that can modify the process parameters (for example, the prices). Most of these procedures are important in terms of measured data since they attest the reliability with which the system manager handles data; this information is used for customer relations. For this reason, the legal metrology requires that be possible to guarantee and verify the compliance of the installation administrator with the requirements previously declared by the manufacturer when issuing the Legal Metrology Compliance Approval associated with that very installation administrator.

Initially, this was accomplished by saving the software for the "sensitive" data transfer to non-rewritable mediums that, in turn, were placed in areas protected by stamping that could be easily inspected. Then, technology made it possible (please see Patent No. 01305025) to implement secure procedures for transferring data and software in order to update the Legal Metrology applications without having to physically replace a circuit component of the installation administrator.

Regarding the new EMV feature described above, it would be particularly advantageous to include the measuring feature in a single device that satisfies both security requirements concerning data transfer for a specific market segment, such as the fuel station segment. In this way, the security of the future EMV standard could be used not only for monetary transactions but also for the secure management of measured data of a fuel station, integrating two distinct secure data transfer systems into a single environment. The result would be a simplified overall architecture of the control system with evident benefits in terms of costs, only one system replacing the currently employed two systems, and in terms of added security when transferring data.

The following problems arise:
- Retrofitting existing POS (Point of Sale) or electronic payment devices with EMV approved terminals designed in a flexible enough manner to make the adaptable to most existing systems
- Incorporating the secure management of so-called Legal Metrology Data-generated, for example, at a fuel station - into a secure architecture realised, at the POS of the same station, in compliance with the EMV specification.

### Objects of the Invention

It is an object of this invention to provide a device, in compliance with EMV specifications, for controlling the secure transmission of data concerning processes such as sales from outdoor payment terminals.

### Description of the Drawings

Fig. 100 - Block diagram of the system architecture embodied in a fuel station controller
Fig. 101 - Diagram of the system showing the communication paths between the subsystems, with the respective software keys used
Fig. 102 - Generic block diagram of the microprocessor
Fig. 103 - Structure of the display unit
Fig. 104 - Structure of the display unit with a single screen consisting of a transparent printed circuit
Fig. 105 - Diagram of a version of the architecture for the CPU card of the display unit found in the OPT

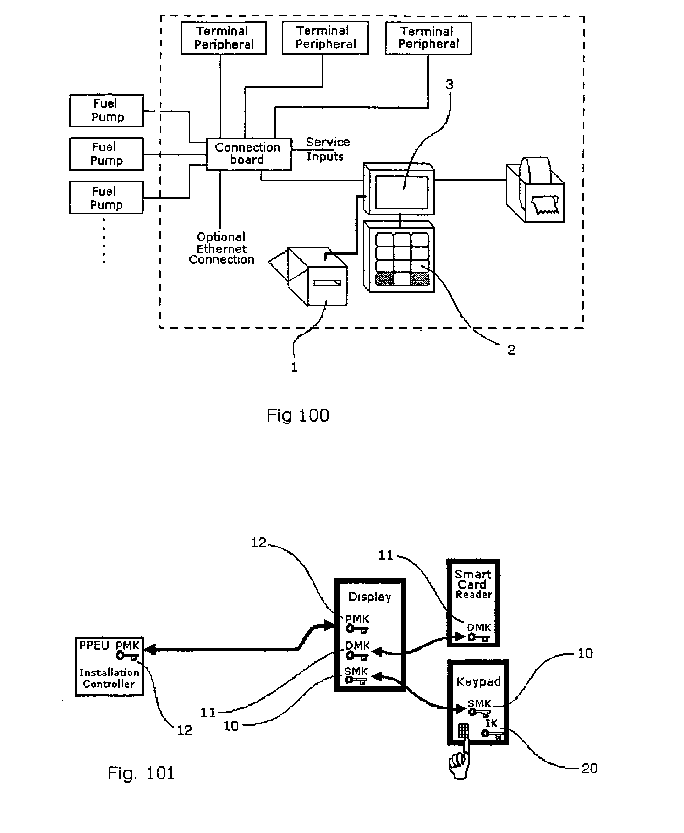

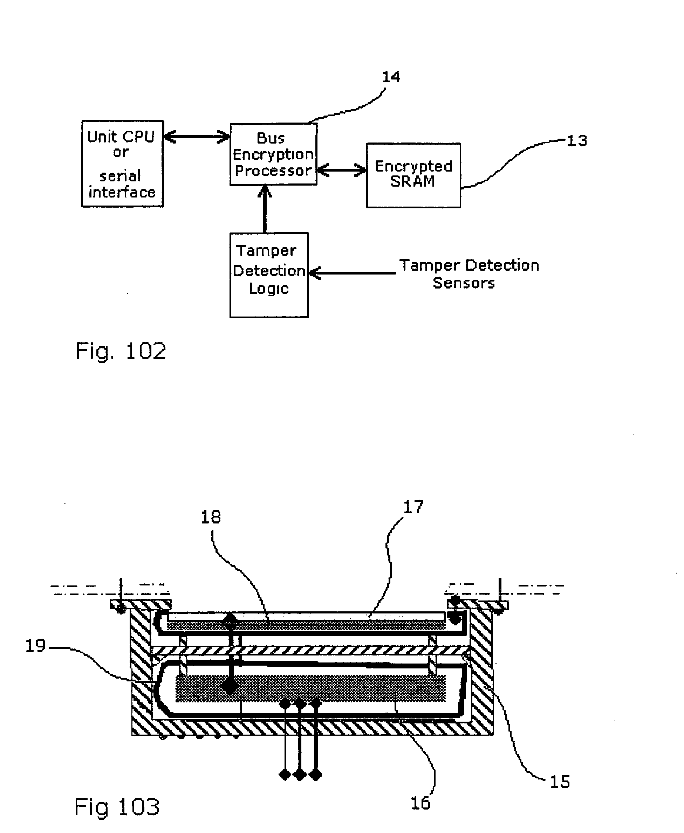

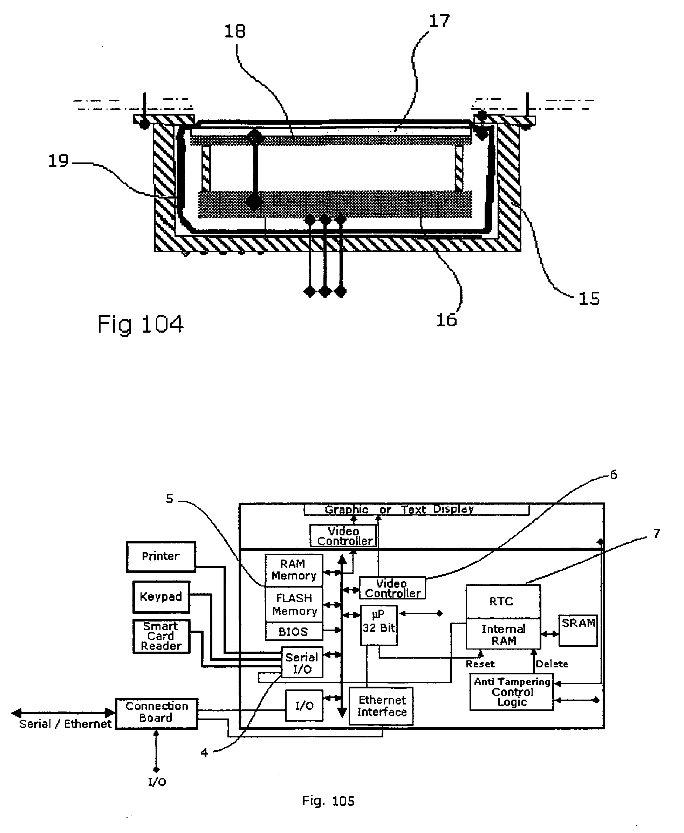

### Description of the Invention

The system in accordance with this invention provides an apparatus for the control and the transmission of data in self-service machines, capable of controlling the operation of the self-service machine and of performing payment transactions according to the EMV standard.

The apparatus according to the present invention is realised in a distributed architecture comprising at least three hardware units that are physically distinct and interconnected in a tamperproof manner, and it is capable of running the following applications in a separate and independent manner:
- An application that manages the payment terminal and the user sequence (user interface, self-service machine control and payment) and is subject, together with the relative hardware, to legal metrology ties.
- An application EFT (Electronic Funds Transfer) that, in case the self-service machine user decides to make his payment with a debit/credit card or with a smart card, is able to perform the relative transaction. This application, together with the relative hardware, is compliant to the standard EMV level 2 and to the international security standards currently in place.

The apparatus according to the present invention thus realises a flexible platform for the legal metrology data control - platform that can be customised according to the needs of each and every single installation - and an EMV2 secure platform that can be, in turn, customised according to the needs of the specific application that manages the payment with debit/credit card or with smart card.

The system according to the present invention allows the employment of only one apparatus instead of two separate apparatus as in the current installations, the control unit of the self-service machine and its peripherals and the debit/credit card terminal pinpad with its peripherals. This brings along clear advantages in terms of simplicity and reduction of installation costs and in terms of security since the most stringent bank security standard is employed for legal metrology data protection.

The CPU that controls the operations of the system according to the present invention, contained in one of the units comprising the system, works in the multiuser / multitasking mode; hence, the applications for handling the different secure data transfers (sales transactions, measured data, software updates, etc.) occupy different and independent areas of the CPU and are called independently and asynchronously of each other.

With reference to Fig. 100, showing a particular embodyment of the present invention, applied to a fuel station controller, the system according to the present invention consists of three distinct parts: a smart card reader unit (1), a keypad unit for entering alphanumerical characters (2), and a display unit (3) preferably of the liquid crystal type or TFT in case of graphic display. Each unit consists of the main device (the smart card reader, the keypad, or the display), a control card equipped with a CPU, and a casing.

Making the system in at least three distinct units gives maximum installation flexibility and allows existing devices to be retrofitted.

All the units - the smart card reader, the display, and the keypad - are tamperproof. To achieve this, CPUs capable of controlling external nonvolatile memories in encrypted format are used. The coding relies on the random generation of a software key that may be deleted by sending a control signal, generated by a unit that monitors tampering, to a specific input pin of the microprocessor.

The smart card reader (1) shall be certified in compliance with the EMV1 standard and the used display (3) shall have two functions: PIN/data prompting in compliance with the EVM standard, and sending help messages and any advertising messages to the user. The CPU found on the control card in the display unit shall work in multitasking mode and shall be responsible also for handling the other sensitive data requiring secure transactions.

The software keys that shall be used to code the PIN (Personal Identification Number) online shall be inputted and saved in the keypad unit (2). Data communications between the three units that comprise the system shall be controlled by secure procedures such as the ones described in patent US 6 119 110. The coded communications between the different units of the system shall be completed by implementing (in compliance with the APACS specifications) Triple DES MK/SK coding, which relies on different software keys for different communication paths.

Taking the example of a fuel station, Fig. 101 shows a diagram of the system displaying the communication paths between the subsystems, with the respective software keys. The System Master Key (SMK, 10) is inputted by the manufacturer into the display unit and into the keypad unit; the Dynamic Master Key (DMK, 11) is generated randomly and saved in the smart card reader. The master key of the installation controller (PPEU Master Key, PMK, 12) is saved in the installation controller itself, in a remote position compared to the fuel pump where the system in accordance with this invention is installed. Finally, the software key for the encrypting of the PIN relative to a specific payment application (IK, 20) is stored in the keypad.

Figure 102 shows the generic block diagram of the single units. The SRAM memory (13) of the microprocessor (14) saves the software keys and the data essential for running the application (application codes or storage keys that are used to decode the software of the application before being loaded by the processor).

If one of the units of the system is tampered with, the software keys are automatically destroyed; this means that each subsystem must respond to any tampering attempts. Fig. 103 shows a version of the display unit of the invention featuring a casing (15) consisting of two distinct parts: one containing the CPU card (16), the other containing the display (17) and the corresponding control card (18). The casing is equipped with closing security contacts and shall be installed in the self-service fuel pump with installation sensors to prevent unlawful removal.

The internal surface of the casing is covered with a flexible printed circuit (19) containing some electrical connections. This printed circuit constitutes a tamperproof screen since the control circuit, which is always operating, continuously monitors the impedance of the electrical connections detecting any tampering attempts. The use of a transparent printed circuit makes it possible to roll up the display completely (see Fig. 104), even the viewer. Additional controls shall be carried out on the temperature around the display. If any irregularities are detected, an alarm signal is generated that immediately deletes the software keys stored in the local SRAM memory (see Fig. 102, detail 13).

The smart card reader and the keypad units are equipped with similar tamperproof systems.

For example, Fig. 105 shows a possible architecture for the CPU card of the display unit found in the OPT (Outdoor Payment Terminal) of the self-service fuel pump. This controls the following functions:
- Management of the master-interface communication protocol, including the management of the operations for downloading the software and keys, which shall also be sent to the keypad unit.
- Management of the communications with the keypad unit.
- Management of the communications with the smart card reader unit.
- Management of the communications with the display and the secure download of data in bitmap format.
- Management of the tamperproof protection in compliance with what was described above.
- Management of the sensitive data generated by the fuel pumps that are made available for subsequent sales operations, issue of receipts, accounting, and all the other important measured procedures.
- Management of the secure download of updated software modules of the measured part of the Site Controller in compliance with what was described in patent Gilbarco IT01305025.

The CPU shall work in the multiuser / multitasking mode, managing at the same time the secure data transmission/reception concerning bank transactions and other sensitive information. The procedures and the software keys regarding different processes shall be managed independently and shall occupy different sections of the battery-operated memory of the card.

To support the above functions effectively, the CPU card of the system architecture given as example shall comprise (see Fig. 105):
- A I/O module (4) for managing the serial and parallel communications with the display.
- A 32 bit CPU (5), 4MB flash memory, 8MB Volatile RAM memory and 1 - 2 MB static RAM Memory, an Ethernet port for any connections to local networks.
- A video processor (6) for supporting the graphics mode of the display.
- A RTC (Real Time Clock) (7) to manage the date and time.

As described in Fig. 105, the overall control system of the POS (Point Of Sale) in compliance with the EMV security standard and the data transactions having "measurement" importance, is managed, in accordance with the invention, by a single CPU (5), contrarily to what occurs in existing fuel stations where a dedicated CPU is responsible for the secure management of the "measured" data.

The software of the application concerning the "measured" data shall be allocated in a section of the battery-operated memory of the CPU and shall be protected by the tamperproof system described above and made in compliance with the EMV specification.

In accordance with this invention, furthermore, it is also possible to manage securely data normally not transmitted through secure transactions such as the ones described above. In this way, the CPU described above can also be used to manage the software updating modules concerning, for example, the management of advertising messages that are shown on multipurpose displays of fuel pumps.

## Claims

1. A device for controlling data transmission consisting of a smart card reader, a keypad for entering numbers and letters, a display unit for displaying the information transmitted and/or received, and possibly one or more other peripherals; where at least one of the specified units contains a CPU unit operating in the multiuser / multitasking mode meaning that the applications for the different secure data transfers that are handled (sales transactions, measured data, secure software updates, etc.) occupy different and independent handling areas in the CPU and are called independently and asynchronously from each other and where the CPU unit manages the security of the transmitted/received data in compliance with EMV specifications.

2. A device as claimed in claim 1 where said CPU unit is enabled to transmit and receive data from a central unit for handling said sensitive data.

3. A device as claimed in claims 1 - 2 where said units comprising the device are made in compliance with the EMV1 specification.

4. A device as claimed in claims 1 - 3 where said CPU unit is found in the display unit.

5. A device as claimed in claim 4 where the display unit consists of two distinct parts: one containing the CPU card, and the other containing the viewer of the display and the respective control card.

6. A device as claimed in claim 5 where the display unit features a flexible printed circuit containing electrical connections connected to tampering detection circuits and covering the internal surface of the casing of the CPU card, and a second flexible printed circuit covering the rear part of the viewer of the display.

7. A device as claimed in claim 6 where the display unit comprises a single transparent flexible printed circuit that completely covers the viewer of the display and the respective control card.

8. A device as claimed in claims 1 - 7 consisting of a smart card reader unit (1), a keypad unit for entering alphanumerical characters (2), and a display unit (3); where said display unit consists of a casing (15) made in two distinct parts: one containing the control card with CPU (16), and the other containing the viewer (17) and the respective control card (18).

9. A device as claimed in claim 2 where said central unit responsible for managing said sensitive data is a installation controller of a fuel station.
